# EUROPEAN PATENT SPECIFICATION

(11) **EP 0 844 620 B1**
(45) Date of publication and mention of the grant of the patent: **27.02.2002**
(21) Application number: 97203615.6
(22) Date of filing: 19.11.1997
(51) Int. Cl.: G21C 19/06, G21C 19/26

(54) **A method and a device for nuclear fuel handling**
Verfahren und Vorrichtung zur Kernbrennstoffhantierung
Méthode et dispositif pour la manutention d'un combustible nucléaire

(30) Priority: 22.11.1996 SE 9604283
(43) Date of publication of application: 27.05.1998
(73) Proprietor: Westinghouse Atom AB, 721 63 Västeras (SE)
(72) Inventor: Hellmark, Sören, 723 38 Västeras (SE); Norbäck, Jan, 725 95 Västeras (SE)
(74) Representative: Berglund, Stefan

(56) References cited:
- EP-A- 0 066 695
- DE-A- 3 202 009
- DE-A- 4 138 348
- SE-B- 429 071
- US-A- 4 724 607

## Description

### TECHNICAL FIELD

The present invention relates to a method and a device for handling fuel rods and fuel assemblies in a nuclear power station of pressurized-water type. More particularly, the invention relates to such handling of fuel rods which occurs when fuel rods are to be replaced and thus have to be withdrawn from a fuel assembly and be temporarily placed in a magazine in order to be subsequently rejected or be inserted into the fuel assembly again.

### BACKGROUND ART

A light-water nuclear power plant comprises a reactor vessel which encloses a reactor core. The reactor core comprises a large number of fuel assemblies. A fuel assembly comprises a bundle of fuel rods. The fuel rods in turn comprise pellets of a nuclear fuel. A coolant in the form of water is arranged to flow from below and up through the core to cool the fuel rods while nuclear fission is in progress. The heated coolant is evaporated whereupon it is passed to a turbine for conversion into electric energy.

In connection with repair and servicing of a nuclear power station of light-water type, it is common to remove fuel assemblies from the reactor for inspection and possible repair. In certain cases, it is desired to remove one or more fuel rods from the fuel assemblies. Particularly in fuel assemblies intended for nuclear reactors of pressurized-water type, it is advantageous to remove fuel rods through the bottom part of the fuel assembly. This is due to the fact that the control rod guide tubes are attached to the bottom nozzle with the aid of screws which are simple to loosen if they are made available from above. The top nozzle, on the other hand, is attached to the control rod guide tubes by means of so-called locking sleeves which are detachably arranged. The locking force exerted by the locking sleeves manage to retain the top nozzle to the control rod guide tubes when the fuel assembly is lifted by lifting the top nozzle. It is more complicated to detach the top nozzle from the control rod guide tubes than to detach the bottom nozzle therefrom. To make the screws, by which the bottom nozzle is attached, available from above, the fuel assembly is turned upside down, that is, through 180° around a transverse axis, such that the bottom part of the fuel assembly is directed upwards. When the bottom nozzle has been removed, the fuel rods become available from above and may be extracted from the fuel assembly.

Defective fuel rods are sorted out from non-defective ones. The fuel rods which are not defective are moved, after having been lifted from the fuel assembly, in the lateral direction to a position above a rod magazine into which they are inserted. The rod magazine is an elongated and normally vertically arranged structure which is open at the top and which comprises a bottom part and a number of lattice-formed spacer members arranged spaced from each other along the structure. The lattice-formed spacer members are adapted, at several levels, to position and keep the fuel rods inserted into the rod magazine spaced from one other. The fuel rods are passed in through the spacer members and arranged to rest on the bottom nozzle. The fuel rods are temporarily stored in the rod magazine in order to be extracted again later on, be moved laterally and again be inserted into the fuel assembly which is then inserted into the reactor core. When it is time again to place the fuel rods in the fuel assembly, they are moved in from above through the bottom part of the fuel assembly and down into the fuel assembly. Then, the fuel assembly is again provided with the bottom nozzle and is turned the right way, that is, is turned through 180° around its transverse axis such that its bottom nozzle is turned downwards. Before the fuel assemblies are moved into the reactor core, they are normally placed in a fuel rack for some time.

Depending on the defect of the fuel rod, it is desirable to have a possibility of extracting fuel rods either through the top part or the bottom part of the fuel assembly. An example of such a case is if the fuel rod has been divided into two axially separated parts. It may then be suitable to extract one part through the top part of the fuel assembly and the other part through the bottom part thereof.

In those cases where a fuel rod has a defect which causes this to be divided into two axially separated parts, the top part of the fuel assembly is dismantled before the fuel assembly is turned through 180° around its transverse axis, whereupon that part of the defective rod is extracted through the top part which is arranged nearest the top part. Thereafter, the fuel assembly is turned through 180° around its transverse axis and the bottom nozzle is dismantled. The remaining part of the defective part is extracted through the upwardly-facing bottom part of the fuel assembly.

The fuel assembly comprises spacers for positioning the fuel rods. In certain fuel assemblies, these spacers are provided with mixing vanes which extend downstream and, to a certain extent, transversely of the flow direction. The task of the mixing vanes is to mix and guide the coolant flowing upwards through the fuel assembly. In this type of fuel assemblies, it may be difficult to extract a rod which has a defect, for example in the form of an outward bulge, through the bottom part of the fuel assembly, since the mixing vanes may become damaged when rods are extracted upstream through the bottom part of the fuel assembly in a direction towards the extent of the mixing vanes.

DE-A-32 02 009 discloses a method and a device for handling fuel assemblies from a nuclear reactor. A handling procedure is proposed, according to which a fuel assembly is handled in such a manner that the fuel rods having a relatively high burn up degree are extracted from the fuel assembly and turned 180°, whereas the fuel rods having a relatively low burn up degree are maintained in their vertical position in the fuel assembly. It appears that the fuel rods extracted from the fuel assembly are turned individually and reintroduced into the fuel assembly. Consequently, the purpose of this prior art is to obtain a fuel assembly in which the fuel rods will not be arranged with their ends, normally oriented downwards in the fuel assembly, oriented in the same direction after the handling procedure is terminated and when the fuel assembly is reintroduced into the nuclear reactor.

DE-A-41 38 348 discloses a method and a device for performing repair work of a control rod guide device. A holding stand is provided in a water pool, and arranged to receive the control rod guide device and to turn the control rod guide device 180°. In such a turned position, components of a bottom plate of the control rod guide device may be replaced in an easy manner.

The object of the present invention is to suggest a method and a device which permit turning of extracted fuel rods through 180° around a transverse axis where the fuel rods are extracted in a direction upwards from a vertically arranged fuel assembly of pressurized-water type in such a way that the whole of or parts of the fuel rods are extracted either through the bottom part or the top part of the fuel assembly. A further object of the invention is to achieve a method and a device which permit storage of extracted fuel rods in such a way that, independently of whether they are extracted through the top part or the bottom part of the fuel assembly, the fuel rods are arranged with their respective ends in the same direction when storing these outside the fuel assembly.

These objects are obtained by the method defined in claim 1 and the device defined in claim 2.

To accomplish this method and this device, the extracted fuel rods are made turnable through 180° around their respective transverse axes by arranging these in a rod magazine which is turnable through 180° around a transverse axis. By arranging the fuel rods so as to be turnable through 180°, independently of whether it has been chosen to extract the fuel rods through the bottom part or the top part of the fuel assembly, the fuel rods may be arranged such that all of them have their ends, which are normally oriented downwards in the fuel assembly, oriented in the same direction in the rod magazine. By arranging the fuel rods such that all of them have the same orientation, the reinsertion of the fuel rods into the fuel assembly is facilitated. It is, of course, possible to extract fuel rods from the fuel assembly alternately from the top part and the bottom part thereof without intermediate turning movements of the rod magazine and then, when reinserting the fuel rods, turn either the rod magazine or the fuel assembly depending on which orientation the fuel rods have been given in the rod magazine.

The turnable rod magazine comprises an elongated structure with detachably sealed ends and a turning member for turning the rod magazine through 180° around a transverse axis. By arranging the detachable top part and the detachable bottom part, optional insertion of fuel rods through the top part or the bottom part of the fuel assembly is permitted, whereafter the rod magazine is sealed and turned through 180°.

The advantage of a turnable rod magazine is that fuel rods may be respectively extracted from and inserted into the fuel assembly either through the top part or the bottom part of the fuel assembly. In particular in fuel assemblies which comprise spacers with mixing vanes, it is advantageous to extract the fuel rods through the top part of the fuel assembly and to insert them through the bottom part thereof. This method implies that both the fuel assembly and the rod magazine are turned through 180° around their respective transverse axes between extraction from the fuel assembly and insertion into the rod magazine of the fuel rods and vice versa.

By turning the rod magazine in dependence on the direction of extraction of the fuel rods from the fuel assembly, all the extracted fuel rods may be arranged with their ends, which are normally arranged downwards, in the same direction in the rod magazine. In this way, insertion of the fuel rods into the fuel assembly is facilitated, since this may take place without intermediate turning movements of the rod magazine or the fuel assembly.

### BRIEF DESCRIPTION OF THE DRAWINGS

The invention will be most readily understood with reference to the accompanying drawings.

Figure 1a shows, in a view from the side, a fuel assembly for a pressurized-water reactor.

Figure 1b shows how a control rod guide tube in a fuel assembly according to Figure 1a is arranged fixedly connected to a bottom nozzle.

Figure 2a shows, in a view from the side, an example of a spacer for a pressurized-water reactor according to Figure 1a.

Figure 2b shows, in a view from above, a spacer according to Figure 2a.

Figure 2c shows a section B-B of the spacer in Figure 2b comprising mixing vanes.

Figure 3a schematically shows, in a view from the side, a reactor vessel in a reactor pool. There are further shown schematically a handling device, a turning stand, a turning basket and a rod magazine in a fuel pool.

Figure 3b schematically shows the parts in Figure 3a in a view from above.

Figure 4a shows a turning basket for receiving a fuel assembly extracted from a reactor vessel or a rod magazine.

Figure 4b shows a turning basket in a section A-A in Figure 4a.

Figure 4c shows the top part of the turning basket in Figure 4a in a view from above.

Figure 4d shows the bottom part of the turning basket in Figure 4a in a view from below.

Figure 5a shows, in a view from the side, an embodiment of a rod magazine for temporary storage of fuel rods which are to be reinserted into a fuel assembly.

Figure 5b shows a view from the ends of a rod magazine according to Figure 5a.

Figure 5c shows parts of a rod magazine in a section C-C in Figure 5b in more detail.

Figure 5d an alternative embodiment of a rod magazine comprising a turning member.

### DESCRIPTION OF THE PREFERRED EMBODIMENTS

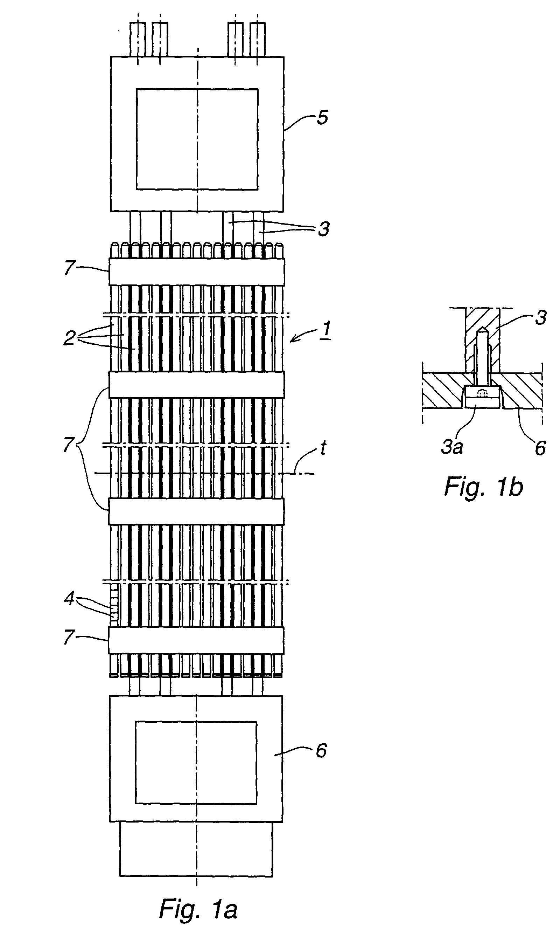

Figure 1a shows an example of a fuel assembly 1 of pressurized-water type which comprises a number of tubular elongated elements arranged in parallel, more particularly fuel rods 2 and control rod guide tubes 3. In the fuel rods 2, pellets 4 of a nuclear fuel are arranged. The fuel rods 2 are kept spaced from each other by means of spacers 7. The control rod guide tubes 3 are retained at the top by a top nozzle 5 and are secured at the bottom to a bottom nozzle 6. Further, the control rod guide tubes 3 are secured to the spacers 7. A coolant flow is adapted to flow from below and up through the fuel assembly 1 which, inserted in a reactor vessel, is normally arranged vertically. A transverse axis of the fuel assembly 1 is marked with the letter t. The control rod guide tubes 3 are secured to the bottom nozzle 6 by means of screws 3a screwed from the outside of the fuel assembly 1, which is shown in more detail in Figure 1b. The control rod guide tubes 3 are attached to the top nozzle 5 of the fuel assembly 1 in a known manner by means of so-called locking sleeves (not shown). A first sleeve is arranged in each control rod guide tube 3 and a second sleeve in a corresponding position in the top nozzle 5. The two sleeves are adapted to cooperate in such a way that the top nozzle 5 is detachably locked to the control rod guide tubes 3. By detaching the locking sleeves from each other, the top nozzle 5 may be detached from the control rod guide tubes 3 and hence the fuel rods 2 are made available for extraction thereof from the fuel assembly 1.

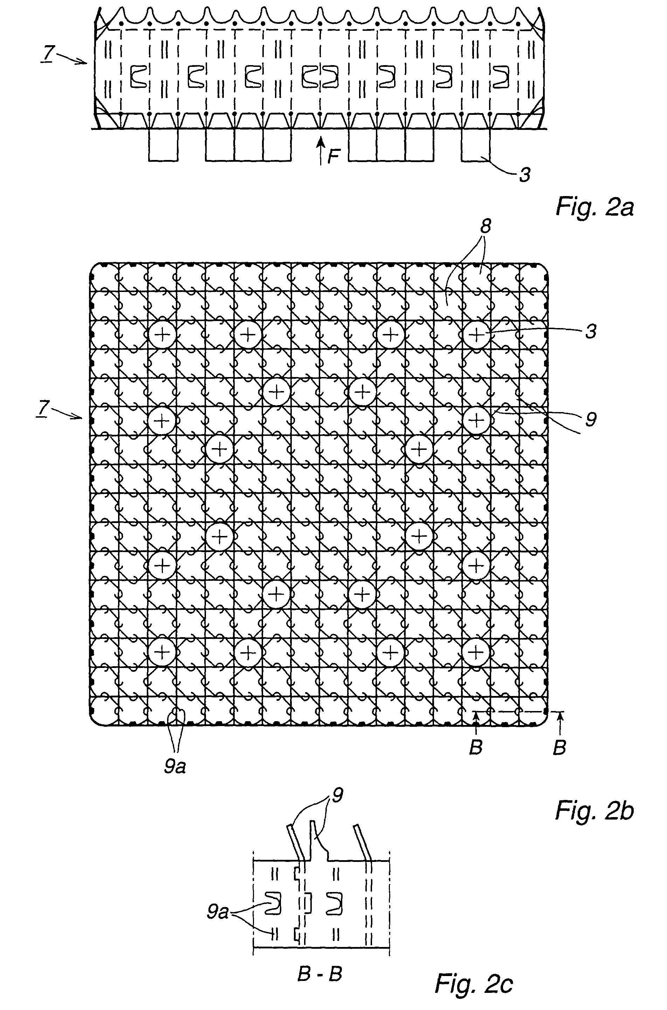

The spacer 7 for a pressurized-water reactor fuel assembly, chosen as an example and shown in Figures 2a-2c, comprises a plurality of cells 8, each one intended to surround and position a fuel rod 2 or a control rod guide tube 3. Mixing vanes 9 are arranged at the cells 8 and extend downstream and partially transversely of the flow direction of the coolant. The flow direction of the coolant is shown by an arrow F in Figure 2a. The purpose of the mixing vanes 9 is to mix and to guide the coolant to ensure that the fuel rods 2 are sufficiently cooled. The cooling is ensured by a water film being permanently present at the surface of the fuel rods 2 so as to avoid dryout on the surface of the fuel rods 2. Otherwise, Figures 2b, 2c show fixed and resilient supports 9a for positioning the fuel rods 2.

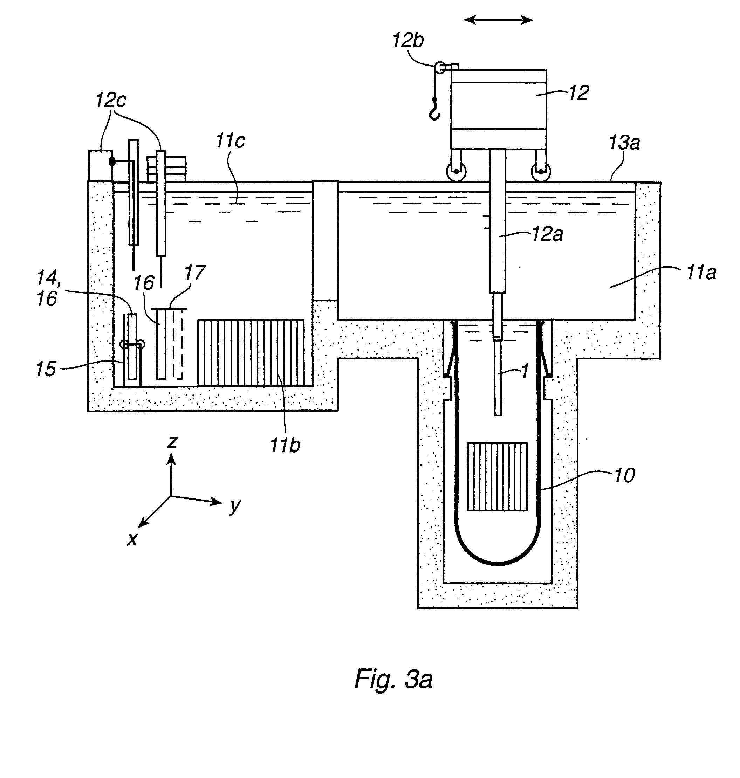

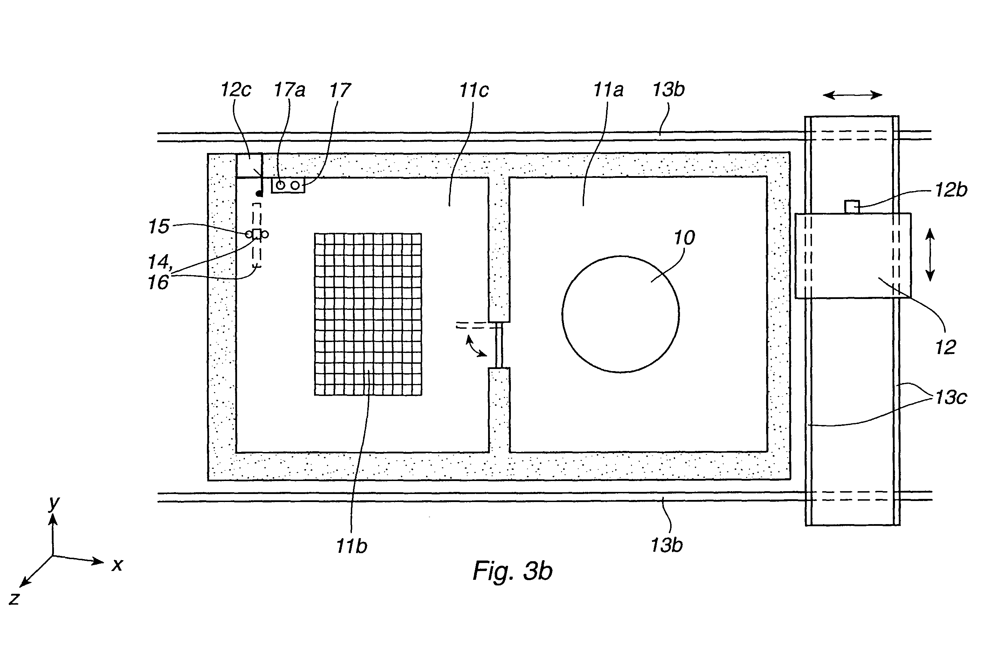

Figures 3a and 3b show an example of a reactor vessel 10 arranged in a water-filled reactor pool 11a and a handling member 12, chosen as an example, arranged at the pool edge on the floor 13a of a reactor hall. The handling member 12 is arranged movable in the x- and y-directions by means of a rail pair 13b disposed in the floor 13a of the reactor hall and a rail pair 13c disposed between the rails of the rail pair 13b.

The handling member 12 is shown in a position where, with the aid of a first gripping device 12a, which via a rope arrangement is controlled by a mast, it lifts a fuel assembly 1 in the z-direction out of the reactor vessel 10. An extracted fuel assembly 1 is arranged with the aid of the handling member 12, which is movable in the x- and y-directions, in a fuel rack 11b in a fuel pool 11c. After the fuel assembly 1 has been allowed to cool, it is arranged in a turning basket 14 by means of the handling member 12. In Figure 3a, the turning basket 14 is shown suspended from a turning stand 15 for turning the turning basket 14 with its contents upside down so that its end which was previously turned upwards in the fuel pool 11c is arranged turned downwards in the fuel pool 11c or vice versa. Figure 3b shows in dashed lines a turning basket 14 in a horizontal position during a turning movement.

Normally, an extracted fuel assembly 1 is turned upside down in the turning stand 15 whereupon the bottom nozzle 6 of the fuel assembly 1 is detached from the lower ends of the control rod guide tubes 3 and is lifted away. When the bottom nozzle 6 is removed, the fuel rods 2 are available from above in the fuel pool 11c and may be extracted through the bottom part of the fuel assembly 1 with the aid of a rod extractor 12c arranged at the fuel pool 11c. The rod extractor 12c is shown in the figure in two different positions. The fuel rods 2 which are extracted from the fuel assembly 1 are placed temporarily in a rod magazine 16 which in the chosen example is arranged suspended from a bracket 17 in the fuel pool 11c. Possibly, the rod magazine 16 may be arranged in a basket (not shown) which is connected to the bracket 17.

In certain cases, it may be suitable to extract certain or all fuel rods 2 through the top part 5 of the fuel assembly 1 before it is possibly turned, whereby the remaining fuel rods 2 may be extracted when the bottom nozzle is dismantled.

Also the rod magazine 16 may be turned through 180° around its transverse axis. In case the rod magazine 16 is to be turned with the aid of the turning member 14, the fuel assembly 1 which is temporarily arranged in the turning basket 14 is placed in a rack 11b in the fuel pool 11c. The rod magazine 16 is then lifted with the aid of the handling member 12, which possibly comprises a second gripping device 12b, up through an opening 17a in the bracket 17 in which it is arranged and is arranged in the turning basket 14, which in turn is arranged in the turning stand 15. In the turning stand 15, the rod magazine 16 is turned upside down in a similar manner as the fuel assembly 1, whereupon the rod magazine 16 is extracted from the turning basket 14 and is arranged in the bracket 17. In connection with the fuel assembly 1 being turned through 180° around its transverse axis t, also the rod magazine 16 is suitably turned through 180° around its transverse axis t such that fuel rods 2 extracted from the fuel assembly 1 are arranged with the same orientation in the rod magazine 16.

It is important to give the fuel rods 2 the same orientation in the rod magazine 16 in order thus to facilitate the reinsertion of the fuel rods 2 in the fuel assembly 1. By the same orientation of the fuel rods 2 in the rod magazine 16 is meant that all the fuel rods 2 are arranged with all of their ends, which are normally arranged downwards in the fuel assembly 1, oriented in the same direction in the rod magazine 16. Reinsertion of the fuel rods 2 takes place either through the bottom part 6 of the fuel assembly 1 or from the top part 5 thereof. The rod magazine 16 is turned so as to fit the chosen direction of insertion. The rod magazine 16 is designed such that it can be gripped by the members 12, 12a or 12b independently of whether it is turned the right way or turned upside down. The rod magazine 16 is also designed such that, independently of orientation, it may be inserted into the rack 11b.

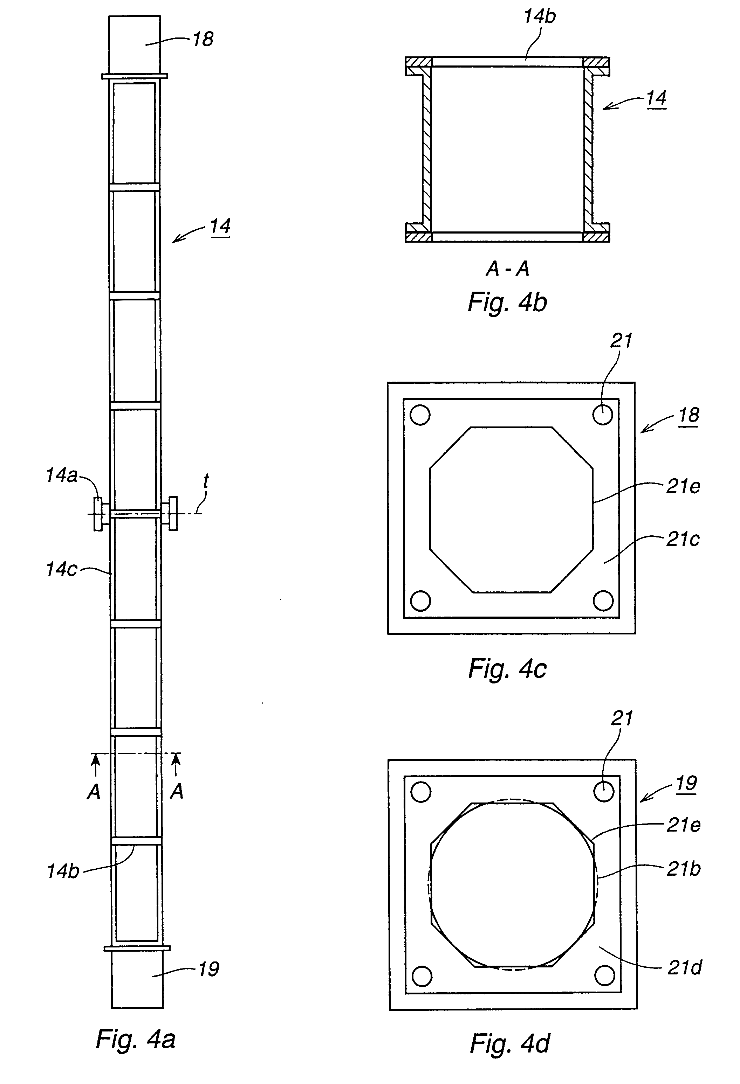

Figure 4a shows the turning basket 14 which comprises a top part 18 and a bottom part 19. The top part 18 and the bottom part 19 are designed as lids which are detachable from the rest of the turning basket 14 and which may be dismantled in dependence on the chosen direction of insertion of a fuel assembly 1 or a rod magazine 16. The upwardly facing lid in the fuel pool 11c is thus dismantled when inserting a fuel assembly 1 or a rod magazine 16 and is mounted when turning in the turning stand 15 and when transporting the turning basket 14. Between the top part 18 and the bottom part 19 there extend a plurality of bars 14c and along these a plurality of transverse bars 14b forming a basket skeleton. The top part 18 and the bottom part 19 comprise control devices 21, which in the chosen example are in the form of openings in a plate 21c and 21d, respectively, which constitute the outer end of the top part 18 and the bottom part 19, respectively (see Figures 4c, 4d). More particularly, the top part 18 and the bottom part 19, respectively, each comprise four openings 21, one in each corner of the substantially square top part 18 and the bottom part 19. In addition, the bottom part 19 comprises a centrally arranged larger opening 21b. In addition, the top part 18 and the bottom part 19 are made with hexagonal openings 21e, shown in the example, in such a way that the handling tool 12 with the first or the second gripping device 12a, 12b, independently of whether the top part 18 or the bottom part 19 of the turning basket 14 is facing upwards or downwards in the pool 11, may be guided towards the top part 18 and the bottom part 19, respectively.

Further, the turning basket 14 is provided with a first turning member 14a arranged at the transverse axis t of the turning basket 14. The first turning member 14a is adapted to cooperate with a second turning member (not shown) arranged in the turning stand 15.

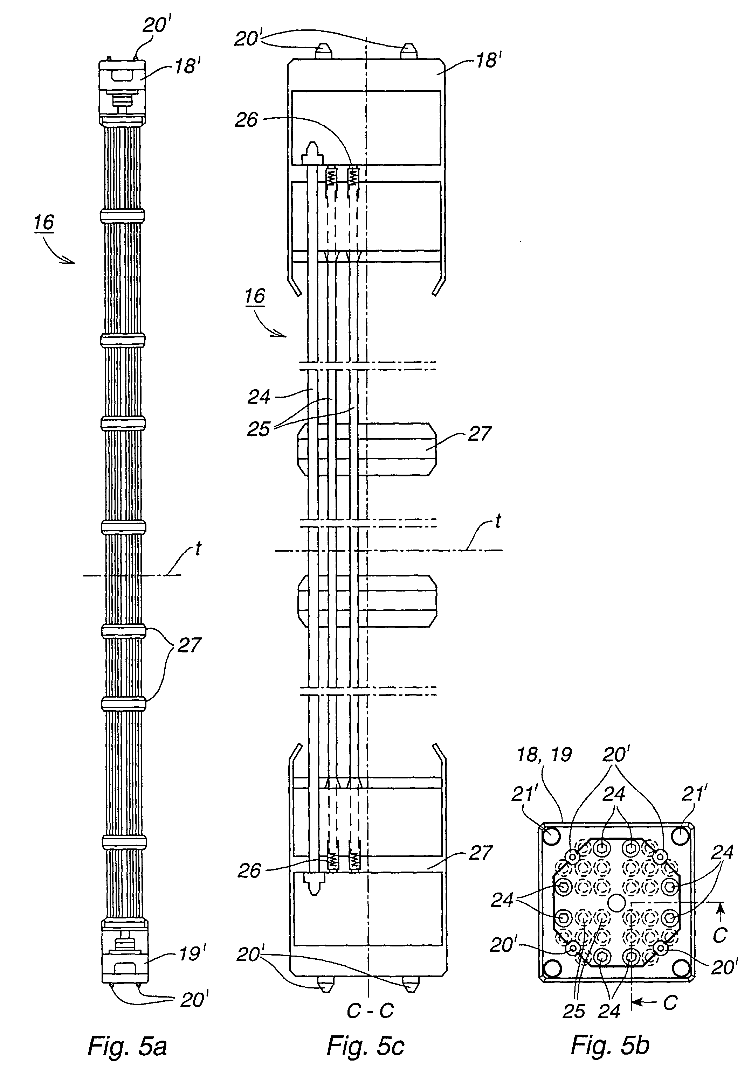

Figure 5a shows an embodiment of a rod magazine 16, which is shown in more detail in Figure 5c. The rod magazine 16 comprises a top part 18' and a bottom part 19', which are detachably mounted for optional insertion and extraction, respectively, of fuel rods 2 into and out of the rod magazine 16. For the sake of clarity, Figure 5c shows only a structural rod 24 and two storage tubes 25. How the other structural rods 24 and storage tubes 25 are arranged is clear from Figure 5b. The top part 18' and the bottom part 19' comprise guide means in the form of pins 20' and openings 21'. The task of the guide pins 20 is to centre the rod magazine 16 when it is inserted into the turning basket 14 by guiding the opening 21b of the turning basket 14. The task of the openings 21' is to guide and position the first or second gripping device 12a, 12b towards the rod magazine 16.

The structural rods 24 in the rod magazine 16 are adapted to fix the top part 18' and the bottom part 19' in relation to each other to form a frame together with these. Further, storage tubes 25 are arranged between the top part 18' and the bottom part 19'. The storage tubes 25 are open at both ends and adapted to receive fuel rods 2 extracted from a fuel assembly 1. The top part 18' and the bottom part 19' are provided with resilient members 26 for damping a fuel rod 2 when inserting this into a storage tube 25 and arranged by its end in the top part 18' and the bottom part 19', respectively. Another task of the resilient members 26 is also to damp movements of the fuel rods 2 in connection with turning of the rod magazine 16. The rod magazine 16 is also provided with support members 27 for positioning the structural rods 24 and the storage tubes 25 in relation to each other. The support members 27 are arranged such that, irrespective of in which direction the rod magazine is inserted into the turning basket 14, the support members 27 are arranged resting against the transverse support members 14b in the turning basket 14. A transverse axis of the rod magazine 16 is marked with the letter t.

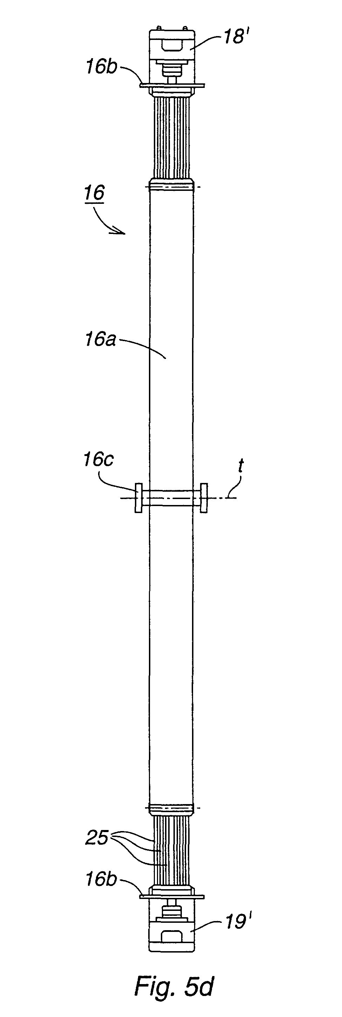

Figure 5d shows an alternative embodiment of a rod magazine 16 with an integrated turning member 16c at the transverse axis t of the rod magazine 16. The rod magazine 16, like that shown in Figure 5a, is provided with a top part 18' and a bottom part 19' and storage tubes 24 and structural tubes 25 extending therebetween. At the mid-portion of the rod magazine 16, a reinforcement part 16a is arranged to stiffen the rod magazine 16 when turning this around the transverse axis t. The reinforcement part 16a is formed as an elongated sleeve which surrounds the storage tubes 24 and the structural tubes 25 along part of their full length. At the central part of the reinforcement part 16a, the above-mentioned turning member 16c is arranged. The turning member 16c is designed for cooperation with the turning stand 15 in which the rod magazine 16 is arranged for turning (see Figures 3a and 3b). At the top part 18' and the bottom part 19', respectively, of the rod magazine 16, a flange 16b is arranged. The flange 16b has a larger outer diameter than the rest of the rod magazine 16. The task of the flange 16b is to function as a suspension device when the rod magazine 16 is arranged in the opening 17a in the bracket 17 (see Figures 3a and 3b). Thus, the flange 16b is made with a diameter which is larger than the diameter of the opening 17a.

## Claims

1. A method for fuel handling in a nuclear power plant of a pressurized-water type comprising a reactor vessel (10) having at least one fuel assembly (1), which includes a top part (5), a bottom part (6) and a plurality of fuel rods (2), the method comprising the steps of:
extracting a fuel assembly from the reactor vessel (10),
arranging the fuel assembly in a fuel pool in such manner that the fuel assembly is turnable,
extracting the whole of, or parts of, the fuel rods (2) from the substantially vertically arranged fuel assembly (1) from above, either through the top part (5) or the bottom part (6) of the fuel assembly (1), and
arranging the fuel rods (2) extracted from the fuel assembly (1) in a normally vertically arranged turnable rod magazine (16) to be capable of being turned through 180° around a transverse axis (t) in dependence on whether the fuel rods (2) are extracted through the top part (5) or the bottom part (6) of the fuel assembly (1), such that all the fuel rods (2) are arranged with their ends, normally oriented downwards in the fuel assembly (1), oriented in the same direction in the rod magazine (16).

2. A device for fuel handling in a nuclear power plant of a pressurized-water type comprising a reactor vessel (10) having at least one fuel assembly (1), which includes a top part (5), a bottom part (6) and a plurality of fuel rods (2), which at a plurality of levels are positioned with the aid of spacers (7), the device comprising:
a rod magazine (16), arranged to receive fuel rods (2) extracted from the fuel assembly (1),
a turning member (14, 14a, 16c), arranged to receive one of said fuel assembly and said rod magazine and to enable turning of said fuel assembly or rod magazine through 180° around a transverse axis (t),
a handling member (12) arranged to extract a fuel assembly (1) from the reactor vessel (10) and to arrange the fuel assembly (1) in a fuel pool to be turnable by means of said turning member, and
a rod extractor (12c) arranged to extract the whole of, or parts of, the fuel rods (2) from the substantially vertically arranged fuel assembly (1) from above, either through the top part (5) or the bottom part (6) of the fuel assembly (1), and to arrange the fuel rods (2) extracted from the fuel assembly (1) in said rod magazine,
wherein the rod magazine is capable of being turned through 180° around a transverse axis (t) by means of said turning member (14, 14a, 16) in dependence on whether the fuel rods (2) are extracted through the top part (5) or the bottom part (6) of the fuel assembly (1), such that all the fuel rods (2) are arranged with their ends, normally oriented downwards in the fuel assembly (1), oriented in the same direction in the rod magazine (16).

3. A device according to claim 2, **characterized in that** the rod magazine (16) comprises a top part (18') and a bottom part (19') which are retained by means of a plurality of structural rods (24), a plurality of storage tubes (25) arranged between the top part (18') and the bottom part (19') and spacers (27) adapted to position the structural rods (24) and the storage tubes (25) in relation to each other.

4. A device according to claim 3, **characterized in that** the rod magazine (16), in close proximity to the storage tubes (25), comprise damping members (26).

5. A device according to claim 2, **characterized in that** the rod magazine (16) at its mid-portion comprises a turning member (16c), the turning member being adapted to cooperate with a turning stand (15) for turning the rod magazine (16) through 180° around its transverse axis (t).

6. A device according to claim 2, **characterized in that** it comprises a turning basket (14) and that the rod magazine (16) is insertable into the turning basket (14) which in turn is adapted to cooperate with a turning stand (15) for turning the rod magazine (16) through 180° around its transverse axis (t) .

7. A device according to claims 3 and 6, **characterized in that** the turning basket (14) comprises a top part (18) and a bottom part (19) and a plurality of bars (14c) extending between the top part (18) and the bottom pare (19) and a plurality of support members (14b) arranged along the turning basket (14), and that the spacers (27) in the rod magazine (16) are arranged along the structural rods (24) and spaced-apart from each other in such a way that the rod magazine (16) inserted into the turning basket (14) is arranged resting against the support members (14b) in the turning basket (14) independently of the direction in which the rod magazine (16) is inserted into the turning basket (14).

## Patentansprüche

1. Verfahren zur Handhabung von Brennstoff in einem Kernkraftwerk des Druckwassertyps, zu dem ein Reaktorgefäß (10) gehört, welches mindestens ein Brennelement (1) enthält, zu welchem ein Kopfstück (5), ein Fußstück (6) und eine Vielzahl von Brennstäben (2) gehören, welches Verfahren folgende Schritte umfaßt:
- Herausziehen eines Brennelements aus dem Reaktorgefäß (10),
- Unterbringung des Brennelementes in einem Brennstoffbecken in der Weise, daß das Brennelement umgedreht werden kann,
- Herausziehen aller oder eines Teils der Brennstäbe (2) von oben aus dem im wesentlichen vertikal angeordneten Brennelement (1), und zwar entweder durch das Kopfstück (5) oder das Fußstück (6) des Brennelements (1) und
- Anordnung der aus dem Brennelement (1) herausgezogenen Brennstäbe (2) in einem normalerweise vertikal angeordneten drehbaren Stabmagazin (16), welches um 180 Grad um eine Querachse (t) in der Weise gedreht werden kann in Abhängigkeit davon, ob die Brennstäbe (2) durch das Kopfstück (5) oder das Fußstück (6) aus dem Brennelement (1) herausgezogen werden, daß alle Brennstäbe (2) mit ihren Enden, die normalerweise im Brennelement (1) nach unten gerichtet sind, in der gleichen Richtung in dem Stabmagazin (16) orientiert sind.

2. Vorrichtung zur Handhabung von Brennstoff in einem Kernkraftwerk des Druckwassertyps, zu dem ein Reaktorgefäß (10) gehört, welches mindestens ein Brennelement (1) enthält, zu welchem ein Kopfstück (5), ein Fußstück (6) und eine Vielzahl von Brennstäben (2) gehören, die auf einer Vielzahl von Höhenniveaus mit Hilfe von Abstandshaltern (7) in Position gehalten werden, zu welcher Vorrichtung gehören:
Ein Stabmagazin (16), welches zur Aufnahme von Brennstäben (2) angeordnet ist, die aus dem Brennelement (1) herausgezogen wurden,
ein Drehglied (14, 14a, 16c), welches angeordnet ist zur Aufnahme des genannten Brennelementes oder des genannten Stabmagazins und welches in der Lage ist, das genannte Brennelement oder das Stabmagazin um 180 Grad um eine Querachse (t) zu drehen,
ein Handhabungsglied (12), welches zum Herausziehen eines Brennelementes (1) aus dem Reaktorgefäß (10) und zur Unterbringung des Brennelements (1) in einem Brennstoffbecken angeordnet ist, damit es für mittels des genannten Drehgliedes gedreht werden kann, und
ein Stabherauszieher (12c), der angeordnet ist zum Herausziehen aller oder eines Teils der Brennstäbe (2) von oben aus dem im wesentlichen vertikal angeordneten Brennelement (1), und zwar entweder durch das Kopfstück (5) oder das Fußstück (6) des Brennelementes (1), und zur Unterbringung der aus dem Brennelement (1) herausgezogenen Brennstäbe (2) in dem genannten Stabmagazin,
wobei das Stabmagazin in der Lage ist, um 180 Grad um eine Querachse (t) mit Hilfe des genannten Drehgliedes (14, 14a, 16c) gedreht zu werden in Abhängigkeit davon, ob die Brennstäbe (2) durch das Kopfstück (5) oder das Fußstück (6) aus dem Brennelement (1) herausgezogen werden, in der Weise, daß alle Brennstäbe (2) mit ihren Enden, die normalerweise im Brennelement (1) nach unten gerichtet sind, in der gleichen Richtung in dem Stabmagazin (16) orientiert sind.

3. Vorrichtung nach Anspruch 2, **dadurch gekennzeichnet, daß** zu dem Stabmagazin (16) gehören: Ein Kopfteil (18') und ein Fußteil (19'), die von einer Vielzahl von Tragstäben (24) zusammengehalten werden, eine Vielzahl von Aufbewahrungsrohren (25), die zwischen dem Kopfteil (18') und dem Fußteil (19') angeordnet sind, und Abstandshalter (27), die imstande sind, die Tragstäbe (24) und die Aufbewahrungsrohre (25) im Verhältnis zueinander zu positionieren.

4. Vorrichtung nach Anspruch 3, **dadurch gekennzeichnet, daß** das Stabmagazin (16) enger Nachbarschaft zu den Aufbewahrungsrohren (25) Dämpfungsglieder (26) hat.

5. Vorrichtung nach Anspruch 2, **dadurch gekennzeichnet, daß** das Stabmagazin (16) in seinem Mittelteil ein Drehglied (16c) enthält, welches imstande ist, im Zusammenwirken mit einem Drehständer (15) das Stabmagazins (16) um 180 Grad um seine Querachse (t) zu drehen.

6. Vorrichtung nach Anspruch 2, **dadurch gekennzeichnet, daß** sie einen Drehkorb (14) enthält und daß das Stabmagazin (16) in den Drehkorb (14) einsetzbar ist, der seinerseits imstande ist, mit einem Drehständer (15) zum Drehen des Stabmagazins (16) um 180 Grad um seine Querachse (t) zusammen zu arbeiten.

7. Vorrichtung nach einem der Ansprüche 3 und 6, **dadurch gekennzeichnet, daß** der Drehkorb (14) ein Kopfteil (18) und ein Fußteil (19) und eine Vielzahl von Stangen (14c) hat, die sich zwischen dem Kopfteil (18) und dem Fußteil (19) erstrecken, und eine Vielzahl von Traggliedern (14b) hat, die längs des Drehkorbs (14) angeordnet sind, und daß die Abstandshalter (27) in dem Stabmagazin (16) längs der Tragstäbe (24) angeordnet sind und derart voneinander auf Abstand gehalten werden, daß das in den Drehkorb (14) eingesetzte Stabmagazin (16) so angeordnet ist, daß es gegen die Tragglieder (14b) in dem Drehkorb (14) ruht unabhängig von der Richtung, in welcher das Stabmagazin (16) in den Tragkorb (14) eingesetzt ist.

## Revendications

1. Procédé de manutention de combustible dans une installation nucléaire du type à eau sous pression, comportant un coeur (10) de réacteur ayant au moins un assemblage (1) combustible, qui comporte une partie (5) supérieure, une partie (6) inférieure et une pluralité de crayons (2) combustibles, le procédé comportant les étapes qui consiste :
à extraire un assemblage combustible du coeur (10) de réacteur,
à mettre l'assemblage combustible dans une piscine à combustible de telle manière que l'assemblage combustible puisse être tourné,
à extraire la totalité des crayons (2) combustibles ou des parties des crayons (2) combustibles de l'assemblage (1) combustible disposé sensiblement verticalement à partir du haut, soit par la partie (5) supérieure soit par la partie (6) inférieure de l'assemblage (1) combustible, et
à mettre les crayons (2) combustibles extraits de l'assemblage (1) combustible dans un magasin (16) de crayons disposé normalement verticalement et pouvant être tourné sur 180° autour d'un axe (t) transversal suivant que les crayons (2) combustibles sont extraits par la partie (5) supérieure ou par la partie (6) inférieure de l'assemblage (1) combustible, de sorte que tous les crayons (2) combustibles sont disposés en ayant leurs extrémités, normalement orientées vers le bas dans l'assemblage (1) combustible, orientées dans la même direction dans le magasin (16) de crayons.

2. Dispositif de manutention de combustible dans une installation nucléaire du type à eau sous pression, comportant un coeur (10) de réacteur ayant au moins un assemblage combustible, qui comporte une partie (5) supérieure, une partie (6) inférieure et une pluralité de crayons (2) combustibles, qui à une pluralité de niveaux sont positionnés à l'aide d'entretoises (7), le dispositif comportant :
un magasin (16) à crayons, destiné à recevoir des crayons (2) combustibles extraits de l'assemblage (1) combustible,
un élément (14, 14a, 16c) de rotation destiné à recevoir l'un de l'assemblage combustible et du magasin à crayons et à permettre de faire tourner l'assemblage combustible ou le magasin à crayons sur 180° par rapport à un axe (t) transversal,
un élément (12) de manutention destiné à extraire un assemblage (1) combustible du coeur (10) de réacteur et à mettre l'assemblage (1) combustible dans une piscine à combustible pour qu'il puisse être tourné au moyen de l'élément de rotation, et
un extracteur (12c) de crayons destiné à extraire par le haut la totalité des crayons (2) combustibles ou des parties des crayons (2) combustibles de l'assemblage (1) combustible disposé sensiblement verticalement, soit par la partie (5) supérieure soit par la partie (6) inférieure de l'assemblage (1) combustible, et à mettre les crayons (2) combustibles extraits de l'assemblage (1) combustible dans le magasin à crayons,
dans lequel le magasin (1) à crayons est capable d'être tourné sur 180° autour d'un axe (t) transversal au moyen de l'élément (14, 14a, 16) de rotation suivant que les crayons (2) combustibles sont extraits par la partie (5) supérieure ou par la partie (6) inférieure de l'assemblage (1) combustible, de sorte que tous les crayons (2) combustibles sont disposés en ayant leurs extrémités, qui sont normalement orientées vers le bas dans l'assemblage (1) combustible, orientées dans la même direction dans le magasin (16) à crayons.

3. Dispositif suivant la revendication 2, **caractérisé en ce que** le magasin (16) à crayons comporte une partie (18') supérieure et une partie (19') inférieure qui sont maintenues au moyen d'une pluralité de crayons (24) de structure, une pluralité de tubes (25) de stockage disposés entre la partie (18') supérieure et la partie (19') inférieure et des entretoises (27) conçues pour positionner les crayons (24) de structure et les tubes (25) de stockage les uns par rapport aux autres.

4. Dispositif suivant la revendication 3, **caractérisé en ce que** le magasin (16) à crayons comporte, à proximité étroite des tubes (25) de stockage, des éléments (26) d'amortissement.

5. Dispositif suivant la revendication 2, **caractérisé en ce que** le magasin (16) à crayons comporte dans sa partie médiane un élément (16c) de rotation, l'élément de rotation étant conçu pour coopérer avec un bâti (15) de rotation pour faire tourner le magasin (16) à crayons sur 180° par rapport à son axe (t) transversal.

6. Dispositif suivant la revendication 2, **caractérisé en ce qu'**il comporte un panier (14) de rotation et **en ce que** le magasin (16) à crayons peut être inséré dans le panier (14) de rotation, qui à son tour est conçu pour coopérer avec un bâti (15) de rotation pour faire tourner le magasin (16) à crayons sur 180° par rapport à son axe (t) transversal.

7. Dispositif suivant les revendications 3 et 6, **caractérisé en ce que** le panier (14) de rotation comporte une partie (18) supérieure et une partie (19) inférieure et une pluralité de barres (14c) s'étendant entre la partie (18) supérieure et la partie (19) inférieure et une pluralité d'éléments (14b) de support disposés le long du panier (14) de rotation, et **en ce que** les entretoises (27) dans le magasin (16) à crayons sont disposées le long des crayons (24) de structure et à distance les unes des autres d'une manière telle que le magasin (16) à crayons inséré dans le panier (14) de rotation repose sur les éléments (14b) de support dans le panier (14) de rotation indépendamment de la direction suivant laquelle le magasin (16) à crayons est inséré dans le panier (14) de rotation.
